# EUROPÄISCHE PATENTSCHRIFT

(11) **EP 3 558 755 B1**
(45) Veröffentlichungstag und Bekanntmachung des Hinweises auf die Patenterteilung: **13.10.2021**
(21) Anmeldenummer: 17808854.8
(22) Anmeldetag: 29.11.2017
(51) Int. Cl.: B60R 16/037

(54) **VERFAHREN ZUM KONFIGURIEREN EINES FAHRZEUGS**
METHOD FOR CONFIGURING A VEHICLE
PROCÉDÉ PERMETTANT DE CONFIGURER UN VÉHICULE

(30) Priorität: 21.12.2016 DE 102016225788
(43) Veröffentlichungstag der Anmeldung: 30.10.2019
(73) Patentinhaber: Audi AG, 85045 Ingolstadt (DE)
(72) Erfinder: MÖLLER, Malte, 94360 Mitterfeld (DE); OSSWALD, Sebastian, 80337 München (DE); MENZL, Stefanie, 82061 Neuried (DE); KRAUSE, Alex, 81245 München (DE); HÖLL, Florian, 81379 München (DE)
(86) Internationale Anmeldenummer: PCT/EP2017/080820
(87) Internationale Veröffentlichungsnummer: WO 2018/114257

(56) Entgegenhaltungen:
- WO-A1-2005/047062
- WO-A1-2016/070960
- DE-A1-102013 201 959

## Beschreibung

Die Erfindung betrifft ein Verfahren zum Konfigurieren eines Fahrzeugs. Des Weiteren betrifft die Erfindung ein entsprechendes Fahrzeug, das dazu eingerichtet ist, das erfindungsgemäße Verfahren umzusetzen.

Heutige Neuwagen, also neu produzierte Fahrzeuge, werden in der Regel für einen Endkunden individuell konzipiert. Üblicherweise ist der Endkunde auch Eigentümer und Besitzer des Fahrzeugs. Das heißt, dass jeder Endkunde die Fahrzeugeigenschaften entsprechend seinen Wünschen auswählt. Sofern die ausgewählten Fahrzeugeigenschaften lediglich Einstellungen von im Fahrzeug verbauten Teilen, sogenannte Hardware, betreffen, können diese üblicherweise über eine Software eingestellt werden. Über die Software werden dann im Fahrzeug vorhandene Dienste aktiviert bzw. deaktiviert. Dies betrifft unter anderem auch sicherheitskritische Funktionen, wie die Konfiguration eines Fahrzeugzugangs oder die Verbindung eines Nutzeraccounts mit einem Fahrzeug. Über den Nutzeraccount können beispielsweise auch Fahrzeugeinstellungen wie eine Ausrichtung der Rückspiegel, Sitzposition und dergleichen geladen werden.

Die gleiche Software ist jedoch auch in einem Fahrzeug verfügbar, das mehreren Nutzern zur Verfügung steht, wie beispielsweise in Flottenfahrzeugen von traditionellen Fahrzeugvermietunternehmen oder sogenannten Car-Sharing-Unternehmen, die eine Flotte von Fahrzeugen zur Nutzung durch mehrere Nutzer bereitstellen. Ein solcher Nutzer ist nur kurzzeitig Besitzer und Nutzer des Fahrzeugs, nämlich während der vereinbarten Mietdauer.

Aus dem Stand der Technik sind Möglichkeiten bekannt, Einfluss auf die Konfiguration eines Fahrzeugs für einen Nutzer zu nehmen.

Aus der DE 10 2015 114 684 A1 ist eine Fahrzeug-Totalrücksetzung bekannt. Bei Detektion eines neuen Nutzers sollen Einstellungen eines Flottenfahrzeugs zurückgesetzt werden.

Aus der DE 10 2015 113 262 A1 ist ein System für gemeinsam genutzte Fahrzeuge bekannt. Dabei soll festgestellt werden, ob sich das Fahrzeug in Sichtweite einer Benutzergerätekamera befindet. Dem Benutzergerät soll wenigstens eine Wegbeschreibung zu dem gemeinsam genutzten Fahrzeug bereitgestellt und Daten des gemeinsam genutzten Fahrzeugs sollen identifiziert werden. Des Weiteren ist aus der '262 A1 die Konfiguration eines Flottenfahrzeugs in Abhängigkeit von einem Nutzerprofil und das Sperren einer Verstellung von Einstellungen eines Hauptnutzers durch einen Zweitnutzer des Flottenfahrzeugs bekannt.

Aus der DE 10 2013 015 737 A1 ist ein Verfahren zur Konfiguration eines Kraftfahrzeugs bekannt. Hierbei soll zur Durchführung einer Konfiguration von Einstellungen eines Flottenfahrzeugs ein Nutzerprofil von einem Zentralrechner abgerufen werden.

Die WO 2016 / 070 960 A1 betrifft ein Verfahren zum Einstellen von Benutzerdaten eines neuen Benutzers in einem Kraftfahrzeug eines bestimmten Fahrzeugtyps zur Personalisierung des Kraftfahrzeugs für den neuen Benutzer. Der neue Benutzer erhält technische Unterstützung beim Einstellen der Benutzerdaten des neuen Benutzers, d. h. der persönlichen Daten des neuen Benutzers und der gewünschten Gerätekonfigurationsdaten. Von den Nutzern werden die persönlichen Daten vieler verschiedener Nutzer des Fahrzeugtyps und deren eingestellte Konfigurationsdaten erhoben. Aus den gesammelten personenbezogenen Daten und den gesammelten Konfigurationsdaten wird eine Zuordnungsregel zwischen personenbezogenen Daten und Konfigurationsdaten gebildet. Nur ein Teil der Benutzerdaten, die von dem neuen Benutzer benötigt werden, wird von dem neuen Benutzer abgefragt.

Dabei ist jedem Nutzer eines solchen Flottenfahrzeugs in gleichem Maße die Software verfügbar. Bei dem aus dem Stand der Technik bekannten Verfahren kann von einem jeweiligen nur kurzzeitigen Nutzer auf alle Einstellmöglichkeiten, die das jeweilige Fahrzeug bietet, zugegriffen werden und folglich individuell eingestellt bzw. angepasst werden. Dadurch sind Änderungen und Konfigurationen im Fahrzeug und in Fahrzeugmodulen durch einen Nutzer möglich, der nur temporären Fahrzeugzugang besitzt. Solche Änderungen können zum Teil nicht gewollt sein oder ein Sicherheitsrisiko darstellen. Des Weiteren ist nachteilig, dass Änderungen oder Verfügbarkeiten von Software oder Einstellungen dem Fahrzeug nicht mitgeteilt werden, da Abschaltungen von Diensten zum Teil ganze Länderkennungen betreffen und der Flottennutzung des Fahrzeugs systemseitig nicht bekannt sind.

Der vorliegenden Erfindung liegt somit die Aufgabe zugrunde, zumindest eines der genannten Probleme zu adressieren. Insbesondere soll eine Lösung angegeben werden, die den Zugriff auf sicherheitskritische Einstellungen einschränkt oder datenschutzrechtliche Vorgaben adressiert. Zumindest soll im Vergleich zu bisherigen Lösungen, eine Alternative vorgeschlagen werden.

Erfindungsgemäß wird ein Verfahren zum Konfigurieren eines Fahrzeugs gemäß Anspruch 1 vorgeschlagen. Des Weiteren wird erfindungsgemäß ein Fahrzeug gemäß Anspruch 7 vorgeschlagen. Weitere jeweilige Ausgestaltungen gehen aus den abhängigen Patentansprüchen und der Beschreibung hervor.

Gemäß dem erfindungsgemäßen Verfahren zum Konfigurieren eines Fahrzeugs, das für eine Mehrzahl von Nutzern vorgesehen ist, werden Nutzerdaten, wobei die Daten eines jeweiligen Nutzers in einem Nutzeraccount zusammengefasst sind, und verfügbare Fahrzeugeigenschaften des Fahrzeugs in einer Speichereinheit hinterlegt. Unter Nutzer wird hierbei und in der weiteren Offenbarung der vorliegenden Anmeldung nicht lediglich ein einzelner Nutzer verstanden, sondern ein Nutzer umfasst auch einen Verwalter von Nutzerkonten oder einen Verwalter von Fahrzeugflotten. Unter Speichereinheit werden im Rahmen der vorliegenden Offenbarung bspw. Datenbanken oder vergleichbare Speichermedien verstanden. Vorteilhaft bei dem Hinterlegen der Daten in einer Speichereinheit wie einer Datenbank oder einem vergleichbaren Medium ist dabei, dass die Speichereinheit zentral verwaltet werden kann. Dadurch kann für eine Mehrzahl von Nutzern und für eine Mehrzahl von Fahrzeugen eine allgemeine Verwaltung geschaffen werden, auf die zugegriffen werden kann und deren Inhalte miteinander verknüpft werden können. Der Nutzer muss seine Daten somit nicht mehr in jedem von ihm benutzten Fahrzeug neu hinterlegen, sondern ein Fahrzeug kann auf die Nutzerdaten über die Verwaltung zugreifen.

Des Weiteren umfasst das erfindungsgemäße Verfahren die Schritte: Definieren von Fahrzeuggruppen anhand der Zugehörigkeit eines jeweiligen dem Fahrzeug zuzuordnenden Nutzeraccounts zu einer jeweiligen Nutzergruppe und Definieren einer Konfiguration durch Vergeben von jeweiligen Verfügbarkeiten von Fahrzeugeigenschaften des Fahrzeugs für einen Nutzer einer jeweiligen Fahrzeuggruppe. Dadurch ist es vorteilhafterweise möglich, das Fahrzeug mindestens einer, ggf. mehreren Fahrzeuggruppen zuzuordnen. Eine Fahrzeuggruppe wird dabei durch die zuzuordnenden Nutzeraccounts definiert, wobei eine Fahrzeuggruppe mehrere Fahrzeuge einer Fahrzeugflotte umfassen kann. Eine Fahrzeuggruppe könnte Firmenfahrzeuge von Unternehmen umfassen, die einen Pool bzw. eine Flotte von Fahrzeugen für Mitarbeiter unterhalten. Eine weitere Fahrzeuggruppe könnte Fahrzeuge von Endkunden umfassen, die ihr Fahrzeug lediglich privat durch mehrere Familienmitglieder nutzen. Darüber hinaus ist vorteilhaft, dass einem Fahrzeug verschiedene Fahrzeuggruppen zugeordnet werden können, nämlich abhängig von dem jeweiligen Nutzer des Fahrzeugs. Somit kann für jede Fahrzeuggruppe eine bestimmte Verfügbarkeit von Funktionen und Diensten im Fahrzeug definiert werden. Auf diese Weise lassen sich bestimmte sicherheitskritische Funktionen, auf die ein Nutzer nicht zugreifen soll, für diesen Nutzer deaktivieren, so dass sie im Fahrzeug nicht verfügbar erscheinen. Die jeweiligen Fahrzeuge werden durch die Zuordnung eines jeweiligen Fahrzeugs zu einem Nutzeraccount eines Flottenverwalters automatisch einer Fahrzeuggruppe zugeordnet. Des Weiteren ist eine Zuordnung zu vorkonfigurierten Untergruppen möglich.

Ein weiterer Schritt des Verfahrens sieht vor, dass die Konfiguration in der Speichereinheit hinterlegt wird. Dadurch ist die Konfiguration immer wieder wiederholbar abrufbar. Auf diese Weise können mehrere Konfigurationen in der Speichereinheit hinterlegt werden.

Eine Ausgestaltung des Verfahrens sieht vor, dass das Fahrzeug einem Nutzeraccount zugeordnet wird. Durch die Zuordnung zu einem Nutzeraccount können gruppenindividuelle Daten und Eigenschaften zusammengefasst an Fahrzeuge übergeben werden.

Eine Weiterbildung des Verfahrens ist dadurch gekennzeichnet, dass dem Fahrzeug eine der Fahrzeuggruppe entsprechende Konfiguration anhand des dem Fahrzeug zugeordneten Nutzeraccounts zugewiesen wird. Vorteilhafterweise kann somit für jede Fahrzeuggruppe eine Verfügbarkeit von Diensten vorkonfiguriert werden. Die Verfügbarkeit der Dienste ist abhängig von der Fahrzeuggruppe. Das Fahrzeug weist also vorteilhafterweise nicht nur eine Konfiguration auf, die in der Produktion in einem Werk eingebaut und eingestellt wird, sondern kann nutzerindividuell oder gruppenindividuell und fahrzeuggruppenspezifisch konfiguriert und zugeordnet werden. Beispiele für fahrzeugspezifische Dienste sind der Fahrzeugzugang, der Versand von Telematikdaten oder das Unterbinden von Funktionen in der Benutzeroberfläche des Fahrzeugs. Weitere Dienste können z. B. ein Fahrtenbuch, ein Eco-Fahrassistent, eine Fahreranmeldung oder ein Fahreffizenzbericht sein. Ein Nutzeraccount enthält also die jeweiligen persönlichen Daten des Nutzers und die Nutzergruppe, der der Nutzer angehört. Für die jeweiligen Nutzergruppen sind bestimmte Fahrzeuggruppen definiert. Eine Fahrzeuggruppe kann dabei für eine oder mehrere Nutzergruppen vorgesehen sein. Wird ein Nutzer auf ein Fahrzeug gebucht bzw. wird dem Fahrzeug ein Nutzer zugewiesen, wird das Fahrzeug auch einer Fahrzeuggruppe zugewiesen, die der Fahrzeuggruppe entspricht, die für die jeweilige Nutzergruppe des Nutzers vorgesehen ist. Die Konfiguration des Fahrzeugs ist somit nicht von vornherein festgelegt, sondern ändert sich entsprechend des dem Fahrzeug zugeordneten Nutzers.

Eine weitere Ausgestaltung des Verfahrens ist dadurch gekennzeichnet, dass die Definition der Konfiguration des Fahrzeugs über eine externe Eingabeeinheit eingegeben wird. Dadurch muss die Konfiguration nicht durch den Nutzer im Fahrzeug vorgenommen werden, sondern kann jeder Zeit, z. B. vor Bereitstellung des Fahrzeugs, erstellt werden. Zur Definition der Konfiguration muss die Eingabeeinheit nicht mit dem Fahrzeug verbunden sein.

Eine Weiterbildung des Verfahrens schlägt vor, dass die Konfiguration des Fahrzeugs durch ein Steuergerät in dem Fahrzeug umgesetzt wird. Auf diese Weise ist sichergestellt, dass die Umsetzung mittels eines Regelwerks geschieht, das von einem Steuergerät umgesetzt wird. Eine fehlerhafte Umsetzung der Konfiguration kann somit vermieden werden.

Entsprechend der Konfiguration werden Fahrzeugeigenschaften für den Nutzer aktiviert, deaktiviert oder geändert. Somit können vorteilhafterweise für jeden Nutzer bzw. für jede Fahrzeuggruppe bestimmte Dienste verfügbar bzw. nicht verfügbar gemacht oder verändert werden. Für entsprechende Nutzer bzw. Nutzergruppen lassen sich auf diese Weise Funktionen und Einstellmöglichkeiten zuschalten oder abschalten oder verändern. Dadurch kann vermieden werden, dass unberechtigte Nutzer Änderungen vornehmen, die nicht gewollt sind oder die sicherheitskritische Funktionen betreffen.

Eine Weiterbildung des Verfahrens sieht vor, dass die Konfiguration über Standardschnittstellen an das Steuergerät im Fahrzeug und/oder an Fahrzeugmodule übermittelt wird. Dadurch kann über allgemein verfügbare Kommunikationsmittel auf das Fahrzeug zugegriffen werden und Daten übertragen werden. Der Zugriff auf das Fahrzeug wird somit erheblich vereinfacht.

Erfindungsgemäß greifen die Fahrzeugmodule, mit denen jeweils wenigstens eine Fahrzeugeigenschaft einstellbar ist, auf wenigstens eine Betriebssoftware zu. Über die Betriebssoftware wird eine direkte Kommunikation der Fahrzeugmodule, die die Konfiguration umsetzen, ermöglicht. Jedes Fahrzeugmodul kann dadurch direkt die vom System vorgegebene Konfiguration umsetzen. Entsprechend der Konfiguration werden dann Fahrzeugmodule, mit denen jeweils Fahrzeugeigenschaften einstellbar sind, für den Nutzer aktiviert oder deaktiviert werden. Für den Nutzer werden dadurch nur solche Anzeige- und/oder Bedienelemente sichtbar, die für den Nutzer entsprechend der Konfiguration verfügbar sind. Dadurch wird für den jeweiligen Nutzer die Bedienung der Einstellungen und die Anzeigen vereinfacht und die Übersichtlichkeit erhöht. Beispielsweise können auf einer Anzeige, die verschiedene verfügbare Einstellmöglichkeiten anzeigt, entsprechende Anzeigen ausgeblendet werden, die nicht verfügbar sind. Bedienelemente können somit ebenfalls deaktiviert und ausgeblendet werden oder durch für die jeweilige Konfiguration verfügbare Elemente ersetzt werden. Für jede Fahrzeuggruppe bzw. für jeden Nutzer kann eine Anzeige bzw. können Bedienelemente entsprechend der Konfiguration erzeugt werden.

Eine noch weitere Ausgestaltung des Verfahrens ist dadurch gekennzeichnet, dass durch die Konfiguration Sendemechanismen definiert werden. Sendemechanismen sind u. a. für den Versand von Daten notwendig, die einen der flottenspezifischen Dienste unterstützen. Hierbei kann u. a. konfiguriert werden, wann Telematikdaten versendet werden. Sendemechanismen können u. a. zeitbasiert oder ereignisbasiert sein, d. h. zu einem spezifischen Zeitpunkt oder bei einem eintretenden Ereignis erfolgen. Ein Beispiel hierfür ist zum Beispiel, dass der Versand der GPS-Position bei Kundenbuchung unterbunden wird, im Diebstahlfall aber einschaltbar ist.

Darüber hinaus wird ein Fahrzeug mit einem Steuergerät vorgeschlagen, das für eine Mehrzahl von Nutzern vorgesehen ist. Das Steuergerät ist dazu eingerichtet, eine Konfiguration des Fahrzeugs zu empfangen, wobei die Konfiguration Verfügbarkeiten von Fahrzeugeigenschaften des Fahrzeugs für eine Fahrzeuggruppe umfasst, wobei die Fahrzeuggruppe anhand eines dem Fahrzeug zuzuordnenden Nutzers definiert ist. Ein solches Fahrzeug kann vorteilhafterweise individuell für eine Fahrzeuggruppe konfiguriert werden.

Die Verfügbarkeiten umfassen dabei Dienste und Funktionen des Fahrzeugs, die für eine Fahrzeuggruppe aktiviert bzw. deaktiviert werden, also verfügbar sind oder nicht verfügbar sind. Somit können für eine Fahrzeuggruppe jeweilige Dienste und Funktionen verfügbar sein, die für eine andere Fahrzeuggruppe nicht verfügbar sind.

Das Steuergerät ist dazu eingerichtet, entsprechend der Konfiguration Fahrzeugeigenschaften zu aktivieren oder zu deaktivieren oder zu ändern. Vorteilhafterweise wird die Konfiguration dadurch allein im Fahrzeug umgesetzt, wodurch Fehler vermieden werden.

Erfindungsgemäß sind die Fahrzeugmodule, die eine Fahrzeugeigenschaft steuern, dazu eingerichtet, mit dem Steuergerät zu kommunizieren und entsprechend der Konfiguration die jeweilige Fahrzeugeigenschaft zu aktivieren oder zu deaktivieren oder zu ändern und nur solche Anzeige- und/oder Bedienelemente sichtbar zu machen, die für den zugeordneten Nutzer entsprechend der Konfiguration verfügbar sind.

Weitere Vorteile und Ausgestaltungen der Erfindung ergeben sich aus der Beschreibung und der beiliegenden Zeichnung. Die Erfindung ist anhand von Ausführungsformen in der Zeichnung schematisch dargestellt und wird unter Bezugnahme auf die begleitende Zeichnung schematisch und ausführlich beschrieben.

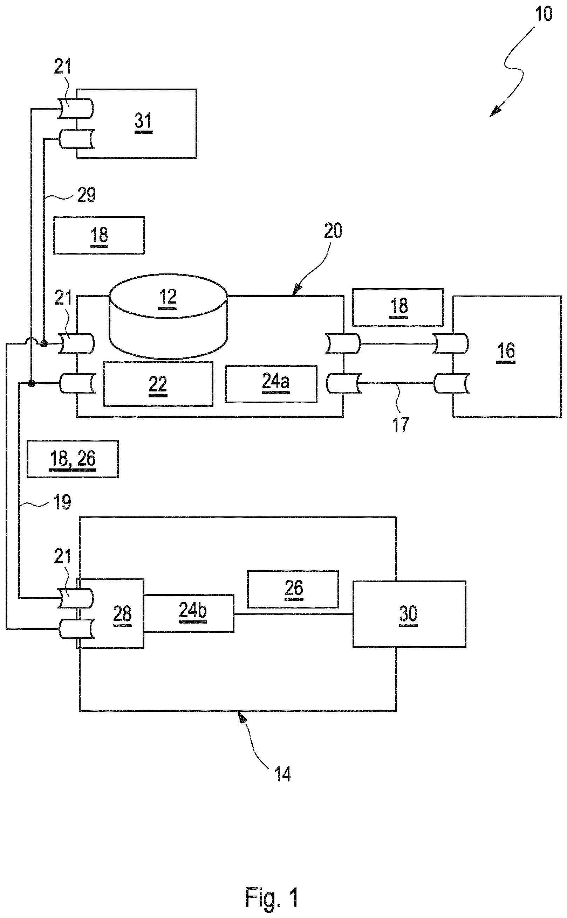

Figur 1 zeigt ein Schema einer Ausführungsform des erfindungsgemäßen Verfahrens.

Das in Figur 1 gezeigte Schema 10 gibt eine Möglichkeit eines Ablaufs des Verfahrens wieder. In einer Speichereinheit 12 werden zunächst Nutzerdaten hinterlegt. Die Speichereinheit 12 kann dabei eine Datenbank oder ein vergleichbares Speichermedium sein. Nutzerdaten können dabei einen Namen, Anschrift, Größe, Gewicht, Vorlieben und andere Informationen eines Nutzers umfassen. Die Nutzerdaten werden dabei in einem Nutzeraccount zusammengefasst, der in der Speichereinheit 12 gespeichert und hinterlegt ist. An dieser Stelle sei nochmals angemerkt, dass unter Nutzer nicht ausschließlich der jeweilige einzelne Nutzer eines Fahrzeugs verstanden wird, sondern auch ein Verwalter von Nutzerkonten und/oder ein Verwalter von Fahrzeugflotten.

Des Weiteren werden in der Speichereinheit 12 Fahrzeugdaten einer Mehrzahl von Fahrzeugen hinterlegt. Die Fahrzeugdaten umfassen dabei in dem Fahrzeug verfügbare Funktionen, Dienste, Eigenschaften sowie Grunddaten wie Fahrzeugtyp, Motorisierung und andere Hardwareeigenschaften. Ein an dem Verfahren beteiligtes Fahrzeug ist mit 14 bezeichnet.

Die Nutzerdaten und die Fahrzeugdaten können über eine externe Eingabeeinheit 16 eingegeben werden. Über die externe Eingabeeinheit 16 können auch Fahrzeuggruppen definiert werden. Des Weiteren können auch Untergruppen definiert werden. Eine Fahrzeuggruppe wird anhand von zuzuordnenden Nutzeraccounts definiert. Die im späteren Verlauf des Verfahrens zuzuordnenden Nutzeraccounts stellen somit verschiedene Nutzergruppen dar. Das Fahrzeug 14 wird also in Abhängigkeit des Nutzers mindestens einer Fahrzeuggruppe zugeordnet. Ein Nutzer gehört dabei einer entsprechenden Nutzergruppe an. Die Zugehörigkeit zu einer jeweiligen Nutzergruppe ist ebenfalls in der Speichereinheit 12 hinterlegt. Nutzergruppen können z. B. Privatpersonen, Familienmitglieder, Kunden eines Fahrzeugvermietunternehmens, Mitarbeiter eines Unternehmens, Werkstatt- bzw. Wartungspersonal, usw. sein. Wird ein Nutzer einem Fahrzeug zugeordnet, wird gleichzeitig dem Fahrzeug eine Konfiguration zugewiesen, die einer jeweiligen Fahrzeuggruppe entspricht, die für die jeweilige Nutzergruppe, der der Nutzer aufgrund seines Nutzeraccounts angehört, vorgesehen ist.

Über die externe Eingabeeinheit 16 werden Konfigurationen 18 eingegeben und definiert. Die Definition erfolgt durch Bestimmen von Verfügbarkeiten für die jeweiligen Fahrzeuggruppen. Die Verfügbarkeiten geben an, welche Dienste und/oder Funktionen dem Nutzer der Fahrzeuggruppe zur Verfügung stehen sollen. In den Konfigurationen 18 können Verfügbarkeiten von Diensten, Sendemechanismen, Nutzerprofile, Flottenzugehörigkeiten und Anzeigen definiert werden. Die Konfigurationen 18 werden ebenfalls in der Speichereinheit 12 hinterlegt. Als externe Eingabeeinheit 16 kommen bspw. Benutzeroberflächen von Arbeitscomputern von Vermietunternehmen in Betracht. Die externe Eingabeeinheit 16 ist über Kommunikationsmittel 17 mit einer fahrzeugexternen Verwaltungseinrichtung 20 verbunden. Über die Kommunikationsmittel 17 werden die definierten Konfigurationen 18 an die Verwaltungseinrichtung 20 übergeben und in der Speichereinheit 12 hinterlegt.

Für die jeweiligen Nutzergruppen werden somit Verfügbarkeiten des Fahrzeugs 14 für den jeweiligen Nutzer, der einer jeweiligen Nutzergruppe angehört, definiert. Nutzer der beispielhaften Nutzergruppe "Wartungsmechaniker" können z. B. auf alle Funktionen und Einstellungen des Fahrzeugs zugreifen, um das Fahrzeug in seiner Gesamtheit zu warten bzw. nach einer Wartung die jeweiligen Funktionen auf Fehlerfreiheit zu prüfen. Nutzer der beispielhaften Nutzergruppe "junges Familienmitglied" können hingegen nur auf eine eingeschränkte Verfügbarkeit von Funktionen zugreifen. Z. B. ist es Mitgliedern der Nutzergruppe "junges Familienmitglied" verwehrt, einen Sportmodus zu aktivieren oder unterstützende Hilfen des Fahrzeugs zu deaktivieren. Diese Verfügbarkeiten würden dann auf den Bedienelementen deaktiviert und/oder ausgeblendet werden. Über die Zuordnung der Nutzer zu dem Fahrzeug wird die für die Nutzergruppen des zuzuordnenden Nutzer, das Fahrzeug einer Fahrzeuggruppe zugewiesen. Entsprechend der Fahrzeuggruppe wird dann die jeweilige Konfiguration an das Fahrzeug 14 übermittelt.

Die Speichereinheit 12 wird in der fahrzeugexternen Verwaltungseinrichtung 20 verwaltet. Die fahrzeugexterne Einrichtung 20 umfasst auch eine Nutzerverwaltung 22 und eine entsprechende Betriebssoftware 24a. Die Betriebssoftware 24a ist so ausgestaltet, dass sie teilweise in der fahrzeugexternen Verwaltungseinrichtung 20 ausgeführt wird und ein komplementärer Teil der Betriebssoftware 24b in dem Fahrzeug 14 ausgeführt wird, damit die fahrzeugexterne Verwaltungseinrichtung 20 und das Fahrzeug darüber kommunizieren können. Die Betriebssoftware 24 weist somit einen fahrzeugexternen Teil 24a und einen fahrzeuginternen Teil 24b auf, die miteinander kommunizieren. Die Betriebssoftware 24a, 24b dient somit der Kommunikation zum Austausch der Konfigurationsinformationen.

Die Nutzerverwaltung 22 ist dazu konfiguriert, auf die Speichereinheit 12 zuzugreifen. Die Nutzerverwaltung 22 ist somit auch dazu eingerichtet, einen Nutzer bzw. einen Nutzeraccount mit einem Fahrzeug 14 zu verknüpfen.

Über eine Zuordnung eines Nutzeraccounts mit einem Fahrzeug 14 wird dem Fahrzeug 14 automatisch die Konfiguration 18 zugewiesen, die der für den Nutzeraccount anhand der jeweiligen Nutzergruppe vorgesehenen Fahrzeuggruppe entspricht. Eine Konfiguration 18 für eine Fahrzeuggruppe kann dabei einen sogenannten Flottenmodus 26 an das Fahrzeug 14 kommunizieren. In einem solchen Flottenmodus 26 können beispielsweise bestimmte sicherheitskritische Funktionen und Dienste deaktiviert sein und somit dem Nutzer im Fahrzeug 14 nicht zur Verfügung stehen. Zum Beispiel könnte eine bestimmte Zugangsart zum Fahrzeug 14 nicht verfügbar und damit in den Anzeige- und Bedienelementen für den Nutzer nicht auswählbar sein. Der Flottenmodus 26 wird vorzugsweise an Fahrzeuge 14 übermittelt, die einer Fahrzeuggruppe angehören, die eine Fahrzeugflotte, bspw. eines Unternehmens, umfasst.

Die Kommunikation mit dem Fahrzeug 14 erfolgt über Kommunikationsmittel 19, die zwischen Standardschnittstellen 21 Daten übertragen. Ein solches Kommunikationsmittel 19 stellt beispielsweise eine drahtlose Datenübertragung dar. Alternativ ist vorgesehen, dass über eine kabelgebundene Verbindung eine Kommunikation mit dem Steuergerät 28 erzielt wird. Die Kommunikation wird unterstützt von der Betriebssoftware 24a, 24b.

Wenn die Konfiguration 18 an das Fahrzeug kommuniziert ist, wird von einem Steuergerät 28 im Fahrzeug 14 die Konfiguration 18 umgesetzt. Die auf dem Steuergerät 28 vorhandene Betriebssoftware 24b führt die Konfiguration 18 aus und schaltet die entsprechenden Dienste bzw. Funktionen an oder aus und überträgt den Flottenmodus 26 auf die jeweiligen Fahrzeugmodule 30. Ein Fahrzeugmodul 30 ist ein Anzeige- oder Bedienelement. Auf dem Anzeige- oder Bedienelement 30 sind nun die entsprechend der Konfiguration verfügbaren Dienste sichtbar. Weitere Fahrzeugmodule 30 können z. B. ein Infotainmentmodul, ein Schließsystemsteuergerät oder ein Schnittstellensteuergerät für ein Telefon oder eine Nahbereichskommunikation (NFC Near Field Communication) sein. Jedenfalls ist das Fahrzeugmodul 30 dazu eingerichtet, Eingaben zum Eingeben von Daten entgegenzunehmen.

Über Kommunikationsmittel 29 im Fahrzeug 14 können weitere Fahrzeugmodule 31 auf die Speichereinheit 12 zugreifen und erhalten die entsprechende Konfiguration übermittelt. Weitere Fahrzeugmodule 31 können bspw. Mobiltelefone, Tablets oder andere Computer sein oder andere Einrichtungen, in die Daten eingegeben werden können. Die Fahrzeugmodule 30, 31 sind dazu konfiguriert, Daten zur Konfiguration und/oder Daten zum Anlegen eines Nutzerprofils zu verarbeiten, wobei mit Verarbeiten jede übliche Form der Datenverarbeitung wie Empfang, Speichern, Kopieren, und dergleichen gemeint ist. In den weiteren Fahrzeugmodulen 31 wird die entsprechende Konfiguration umgesetzt und der entsprechende Dienst bzw. die entsprechende Funktion aktiviert oder deaktiviert oder verändert, also die Verfügbarkeit konfiguriert. Wird beispielsweise über das Fahrzeugmodul 31 ein Nutzerprofil angelegt, wird das angelegte Nutzerprofil in der fahrzeugexternen Verwaltungseinrichtung 20 abgelegt. Über das Nutzerprofil bzw. die fahrzeugexterne Verwaltungseinrichtung 20 wird dann der Verlauf der Kommunikation zwischen der Verwaltungseinrichtung 20 und dem Fahrzeug 14 definiert.

Darüber hinaus ist vorgesehen, dass ein Fahrzeugmodul 30, 31 über die Betriebssoftware 24a zentral mit der Betriebssoftware 24b kommuniziert. Hierdurch werden die Prozesse verschlankt und die Kommunikation zentralisiert.

## Patentansprüche

1. Verfahren zum Konfigurieren eines Fahrzeugs (14), das für eine Mehrzahl von Nutzern vorgesehen ist, für einen Nutzer umfassend die Schritte:
- Hinterlegen von Nutzerdaten, wobei die Daten eines jeweiligen Nutzers in einem Nutzeraccount zusammengefasst sind, und von verfügbaren Fahrzeugeigenschaften des Fahrzeugs (14) in einer Speichereinheit (12),
- Definieren einer Konfiguration (18) für das Fahrzeug (14), und
- Hinterlegen der Konfiguration (18) in der Speichereinheit (12),
- Übertragen der Konfiguration (18) an das Fahrzeug (14),
**dadurch gekennzeichnet, dass**
- die Nutzerdaten eine Zugehörigkeit zu einer Nutzergruppe umfassen, welche Nutzergruppe mit einer Fahrzeuggruppe verknüpft ist, für die eine bestimmte Verfügbarkeit von Funktionen und Diensten im Fahrzeug (14) definiert ist, und
- die Definition der Konfiguration (18) für das Fahrzeug (14) durch Vergeben von in der mit der Nutzergruppe des jeweiligen Nutzers verknüpften Fahrzeuggruppe definierten Fahrzeugeigenschaften des Fahrzeugs (14) erfolgt, und
- durch das Übertragen der Konfiguration (18) an das Fahrzeug (14) entsprechend der Konfiguration (18) Fahrzeugeigenschaften, insbesondere Dienste, Funktionen und Einstellmöglichkeiten, für den Nutzer aktiviert, deaktiviert oder verändert werden, wobei Fahrzeugmodule (30, 31), mit denen jeweils Fahrzeugeigenschaften einstellbar sind, für den Nutzer aktiviert oder deaktiviert werden und für den Nutzer dadurch nur solche Anzeige- und/oder Bedienelemente sichtbar werden, die für den Nutzer entsprechend der Konfiguration (18) verfügbar sind.

2. Verfahren nach Anspruch 1, **dadurch gekennzeichnet, dass** die Definition der Konfiguration (18) des Fahrzeugs (14) über eine externe Eingabeeinheit (16) eingegeben wird, die sich nicht im Fahrzeug befindet und nicht mit dem Fahrzeug verbunden ist.

3. Verfahren nach Anspruch 2, **dadurch gekennzeichnet, dass** die Konfiguration (18) des Fahrzeugs (14) durch ein Steuergerät (28) in dem Fahrzeug (14) umgesetzt wird.

4. Verfahren nach Anspruch 3, **dadurch gekennzeichnet, dass** die Konfiguration (18) über Standardschnittstellen (21) an das Steuergerät (28) im Fahrzeug (14) und/oder an Fahrzeugmodule (30, 31) übermittelt wird.

5. Verfahren nach Anspruch 4, **dadurch gekennzeichnet, dass** die Fahrzeugmodule (30, 31), mit denen jeweils wenigstens eine Fahrzeugeigenschaft einstellbar ist, auf wenigstens eine Betriebssoftware (24a, 24b) zugreifen.

6. Verfahren nach einem der voranstehenden Ansprüche, **dadurch gekennzeichnet, dass** durch die Konfiguration (18) Sendemechanismen definiert werden.

7. Fahrzeug (14), das für eine Mehrzahl von Nutzern vorgesehen ist, mit einem Steuergerät (28), das eine Konfiguration (18) des Fahrzeugs (14) für einen dem Fahrzeug (14) zuzuordnenden Nutzer empfängt, wobei die Konfiguration (18) Verfügbarkeiten von Fahrzeugeigenschaften des Fahrzeugs (14) für eine Fahrzeuggruppe umfasst, wobei die Fahrzeuggruppe anhand eines dem Fahrzeug (14) zuzuordnenden Nutzers bzw. Nutzeraccounts definiert ist, und wobei das Steuergerät (28) entsprechend der Konfiguration (18) Fahrzeugeigenschaften, insbesondere Dienste, Funktionen und Einstellmöglichkeiten, aktiviert, deaktiviert oder verändert, indem Fahrzeugmodule (30, 31), die eine Fahrzeugeigenschaft steuern, mit dem Steuergerät (28) kommunizieren und entsprechend der Konfiguration (18) die jeweilige Fahrzeugeigenschaft aktivieren oder deaktivieren oder ändern und nur solche Anzeige- und/oder Bedienelemente sichtbar machen, die für den zugeordneten Nutzer entsprechend der Konfiguration (18) verfügbar sind.

8. Fahrzeug (14) nach Anspruch 7, das entsprechend einem durch die Konfiguration (18) definierten Sendemechanismus Daten versendet.

## Claims

1. Method for configuring a vehicle (14) for a user, which vehicle is intended for a plurality of users, comprising the steps:
- storing user data, the data of a respective user being compiled in a user account, and available vehicle properties of the vehicle (14) in a memory unit (12),
- defining a configuration (18) for the vehicle (14), and
- storing the configuration (18) in the memory unit (12),
- transmitting the configuration (18) to the vehicle (14), **characterised in that**
- the user data comprise an association with a user group, which user group is linked to a vehicle group, for which a specific availability of functions and services in the vehicle (14) is defined, and
- the definition of the configuration (18) for the vehicle (14) is done by assigning vehicle properties of the vehicle (14) defined in the vehicle group associated with the user group of the respective user, and
- by transmitting the configuration (18) to the vehicle (14), vehicle properties, in particular services, functions and setting options, are activated, deactivated or altered for the user in accordance with the configuration (18), wherein vehicle modules (30, 31), with which respective vehicle properties can be set, are activated or deactivated for the user and thereby for the user only those display and/or operating elements that are available to the user in accordance with the configuration (18) are made visible.

2. Method according to claim 1, **characterised in that** the definition of the configuration (18) of the vehicle (14) is entered via an external input unit (16), which is not located in the vehicle and is not connected to the vehicle.

3. Method according to claim 2, **characterised in that** the configuration (18) of the vehicle (14) is implemented by a control device (28) in the vehicle (14).

4. Method according to claim 3, **characterised in that** the configuration (18) is conveyed to the control device (28) in the vehicle (14) and/or to vehicle modules (30, 31) via standard interfaces (21).

5. Method according to claim 4, **characterised in that** the vehicle modules (30, 31), with each of which at least one vehicle property can be set, access at least one operating software (24a, 24b).

6. Method according to any one of the preceding claims, **characterised in that** transmission mechanisms are defined by the configuration (18).

7. Vehicle (14), which is intended for a plurality of users, comprising a control device (28) that receives a configuration (18) of the vehicle (14) for a user who is to be assigned to the vehicle (14), wherein the configuration (18) comprises availabilities of vehicle properties of the vehicle (14) for a vehicle group, wherein the vehicle group is defined on the basis of a user or user account that is to be assigned to the vehicle (14), and wherein the control device (28) activates, deactivates or alters vehicle properties, in particular services, functions and setting options, according to the configuration (18), in that vehicle modules (30, 31) that control a vehicle property communicate with the control device (28) and activate or deactivate or alter the respective vehicle property in accordance with the configuration (18) and make visible only those display and/or operating elements that are available to the associated user in accordance with the configuration (18).

8. Vehicle (14) according to claim 7, which transmits data by a transmission mechanism defined by the configuration (18).

## Revendications

1. Procédé permettant de configurer pour un utilisateur un véhicule (14) prévu pour une pluralité d'utilisateurs, comprenant les étapes consistant à :
- stocker, dans une unité de mémoire (12), des données d'utilisateur, dans lequel les données d'un utilisateur respectif sont rassemblées dans un compte d'utilisateur, et des caractéristiques de véhicule disponibles du véhicule (14),
- définir une configuration (18) pour le véhicule (14), et
- stocker la configuration (18) dans l'unité de mémoire (12),
- transmettre la configuration (18) au véhicule (14), **caractérisé en ce que**,
- les données d'utilisateur comprennent une appartenance à un groupe d'utilisateurs, lequel groupe d'utilisateurs est associé à un groupe de véhicules pour lequel une certaine disponibilité de fonctions et de services au sein du véhicule (14) est définie, et
- la définition de la configuration (18) pour le véhicule (14) intervient grâce à une attribution de caractéristiques de véhicule du véhicule (14) définies au sein du groupe de véhicules associé au groupe d'utilisateurs de l'utilisateur respectif, et
- grâce à la transmission de la configuration (18) au véhicule (14) conformément à la configuration (18), des caractéristiques de véhicule, en particulier des services, des fonctions et des possibilités d'ajustement, sont activées, désactivées ou modifiées pour l'utilisateur, dans lequel des modules de véhicule (30, 31), avec lesquels des caractéristiques de véhicule peuvent respectivement être ajustées, sont activés ou désactivés pour l'utilisateur, et de ce fait seuls les éléments d'affichage et/ou de contrôle qui sont disponibles pour l'utilisateur conformément à la configuration (18) sont visibles pour l'utilisateur.

2. Procédé selon la revendication 1, **caractérisé en ce que** la définition de la configuration (18) du véhicule (14) est entrée par l'intermédiaire d'une unité d'entrée (16) qui ne se trouve pas dans le véhicule et n'est pas reliée au véhicule.

3. Procédé selon la revendication 2, **caractérisé en ce que** la configuration (18) du véhicule (14) est réalisée grâce à un appareil de commande (28) du véhicule (14).

4. Procédé selon la revendication 3, **caractérisé en ce que** la configuration (18) est transmise par l'intermédiaire d'interfaces standard (21) à l'appareil de commande (28) du véhicule (14) et/ou à des modules de véhicule (30, 31).

5. Procédé selon la revendication 4, **caractérisé en ce que** les modules de véhicule (30, 31), avec lesquels respectivement au moins une caractéristique de véhicule peut être ajustée, accèdent à au moins un logiciel d'exploitation (24a, 24b).

6. Procédé selon l'une quelconque des revendications précédentes, **caractérisé en ce que** des mécanismes d'envoi sont définis par la configuration (18).

7. Véhicule (14) prévu pour une pluralité d'utilisateurs, avec un appareil de commande (28) qui reçoit une configuration (18) du véhicule (14) pour un utilisateur à associer au véhicule (14), dans lequel la configuration (18) comprend des disponibilités de caractéristiques de véhicule du véhicule (14) pour un groupe de véhicules, dans lequel le groupe de véhicules est défini en se basant sur un utilisateur ou un compte d'utilisateur à associer au véhicule (14), et dans lequel l'appareil de commande (28) active, désactive ou modifie des caractéristiques de véhicule, en particulier des services, des fonctions et des possibilités d'ajustement conformément à la configuration (18), du fait que des modules de véhicule (30, 31) commandant une caractéristique de véhicule communiquent avec l'appareil de commande (28) et activent ou désactivent ou modifient la caractéristique de véhicule respective conformément à la configuration (18) et rendent visibles, conformément à la configuration (18), uniquement les éléments d'affichage et/ou de contrôle qui sont disponibles pour l'utilisateur associé.

8. Véhicule (14) selon la revendication 7, qui envoie des données conformément à un mécanisme d'envoi défini grâce à la configuration (18).
